# EUROPEAN PATENT SPECIFICATION

(11) **EP 3 202 933 B1**
(45) Date of publication and mention of the grant of the patent: **29.01.2020**
(21) Application number: 15847752.1
(22) Date of filing: 28.09.2015
(51) Int. Cl.: C22C 21/10, C22C 21/12, C22C 21/02, F28F 19/06, F28F 21/08, B23K 35/22, B23K 35/28, B32B 15/01, C22C 21/14

(54) **ALUMINUM ALLOY BRAZING SHEET**
LÖTBLECH AUS ALUMINIUMLEGIERUNG
TÔLE À BRASAGE EN ALLIAGE D'ALUMINIUM

(30) Priority: 30.09.2014 JP 2014201066
(43) Date of publication of application: 09.08.2017
(73) Proprietor: Kabushiki Kaisha Kobe Seiko Sho (Kobe Steel, Ltd.), Kobe-shi, Hyogo 651-8585 (JP); Denso Corporation, Kariya-shi, Aichi 448-8661 (JP)
(72) Inventor: KIMURA, Shimpei, Tochigi 321-4367 (JP); TSURUNO, Akihiro, Moka-shi, Tochigi 321-4367 (JP); IZUMI, Takahiro, Moka-shi, Tochigi 321-4367 (JP); SHIBUYA, Yuji, Moka-shi, Tochigi 321-4367 (JP); TERAMOTO, Hayaki, Kariya-shi Aichi 448-8661 (JP); YAMAMOTO, Michiyasu, Kariya-shi Aichi 448-8661 (JP); HASEGAWA, Manabu, Kariya-shi Aichi 448-8661 (JP); TESHIMA, Shoei, Kariya-shi Aichi 448-8661 (JP)
(74) Representative: Müller-Boré & Partner Patentanwälte PartG mbB
(86) International application number: PCT/JP2015/077230
(87) International publication number: WO 2016/052366

(56) References cited:
- WO-A1-2005/014274
- JP-A- H07 207 393
- JP-A- H11 199 958
- JP-A- H11 199 958
- JP-A- 2002 206 129
- JP-A- 2012 207 276
- JP-A- 2014 077 179
- JP-A- 2015 190 045
- US-A1- 2002 142 185
- US-B1- 6 413 331

## Description

### Technical Field

The present invention relates to an aluminum alloy brazing sheet suitable for use in automobile heat exchangers and the like.

### Background Art

Brazing sheets are conventionally used as a material for heat exchangers in automobiles and the like. A brazing sheet is made of an aluminum alloy (hereinafter sometimes referred to as an "Al alloy") as a core material, with either a brazing filler material or a sacrificial anode material formed on both sides of the core material.

In recent years, automobile heat exchangers have tended to further reduce their weight and size. With such reductions, the brazing sheets forming tubes, which occupy the majority of the mass of the heat exchanger, have been required to be thinned. The brazing sheet is thinned to about 200 µm so far, but to make the brazing sheet even thinner, it needs to have higher strength and corrosion resistance to further thinning. However, if the thickness of the core material is reduced for the thinning of the brazing sheet, the brazing sheet will have difficulty in ensuring the post-braze strength. On the other hand, if the thickness of the sacrificial anode material is reduced, the corrosion resistance becomes difficult to ensure. Further, if the thickness of the brazing filler material is reduced, the brazability will be degraded.

To address these issues, many studies have been conventionally done. For example, Patent Document 1 discloses a brazing sheet with excellent brazability and post-braze strength that utilizes an Al-Mn-Si-Fe-Cu-Mg based alloy as the core material of the brazing sheet. Patent Document 2 discloses a clad material with excellent post-braze strength, corrosion resistance, and brazability when using an Al-Mn-Si-Cu-Ti based alloy as the core material of the brazing sheet JP H11199958 A also discloses Al-clad brazing sheet.

### Conventional Art Document

### Patent Document

Patent Document 1: JP 2009-22981 A
Patent Document 2: JP 2011-68933 A

### Disclosure of the Invention

### Problems to be Solved by the Invention

In the techniques disclosed in Patent Documents 1 and 2, however, the minimum thickness of the brazing sheet disclosed as the example is 250 µm. Thus, to obtain a much thinner brazing sheet of less than 200 µm in thickness, the brazing sheet must be developed to achieve all the adequate post-braze strength, corrosion resistance, and brazability.

It is revealed that for a thinned sheet which is less than 200 µm in thickness, the thickness of the core material, which is responsible for the strength, is thinned, which significantly decreases the amount of remaining respective additive elements after the heating for the brazing, resulting in a drastic reduction in the strength of the brazing sheet. In particular, the reduction in the amount of remaining copper (Cu) element, which is added to make the corrosion potential of the core material positive, is confirmed to have a great influence on the properties of the brazing sheet, especially leading to the degradation in not only the strength but also the corrosion resistance.

To ensure the pressure resistance of a tube itself, a method is proposed to form an internal columnar structure by bonding parts of the front and back sides of a brazing sheet together while bending the sheet at its center in a tube-width direction, as shown in Figs. 1, 2, 4, and the like disclosed in JP 2007-163073 A. In particular, when the thickness of the brazing sheet is less than 200 µm, the formation of the internal columnar structure is essential to compensate for the reduction in the pressure resistance due to the thinning. For this reason, it is necessary to ensure not only the brazability on the brazing filler material side but also the brazability on a sacrificial anode material side. As shown in Figs. 3, 7, and the like of the JP 2007-163073 A, even a caulking type of tube is also required to ensure the brazability on the brazing filler material side as well as the sacrificial anode material side, regardless of the presence of the internal columnar structure.

The present invention has been made in view of the foregoing circumstances, and it is an object of the present invention to provide an aluminum alloy brazing sheet that is excellent in post-braze strength and corrosion resistance and exhibits excellent brazability at both surfaces on the brazing filler material side and the sacrificial anode material side, even though the thickness of the brazing sheet is thin, namely, less than 200 µm.

### Means for Solving the Problems

To solve the foregoing problems, the inventors have intensively studied about the influences of the thickness of the brazing sheet on the compositions of the core material and sacrificial anode material after a heat treatment for brazing when the thickness of the brazing sheet is less than 200 µm.

Consequently, it is found that as measures to achieve both the adequate strength and corrosion resistance for the brazing sheet which is less than 200 µm in thickness, the content of Cu added to the core material is increased to a relatively high level, thereby enabling the strengthening, and furthermore, the zinc (Zn) content and thickness of the sacrificial anode material are optimized, thereby making it possible to ensure the same level of corrosion resistance as that obtained from a sheet of 200 µm or more in thickness. Moreover, the magnesium (Mg) content in the sacrificial anode material is restricted to a lower level, thereby maintaining the brazability at the sacrificial anode material. Based on the new findings mentioned above, the present invention has been achieved.

The aluminum alloy brazing sheet according to the present invention is defined by the appended claim. It includes a core material, a brazing filler material provided on one surface of the core material and formed of an Al-Si based alloy, and a sacrificial anode material provided on the other surface of the core material, the brazing sheet having a thickness of less than 200 µm, wherein the core material includes more than 1.5% by mass and 2.5% or less by mass of Cu, and 0.5 to 2.0% by mass of Mn, with the balance being Al and inevitable impurities, wherein the sacrificial anode material includes 2.0 to 10.0% by mass of Zn, an Mg content in the sacrificial anode material being restricted to 0.10% or less by mass, with the balance being Al and inevitable impurities, and wherein each of the brazing filler material and the sacrificial anode material has a thickness thereof in a range of 15 to 50 µm, and the total of cladding rates of the brazing filler material and sacrificial anode material is 50% or less.

With such a structure, the aluminum alloy brazing sheet in the present invention can achieve high-levels of post-braze strength, corrosion resistance, and brazability at both surfaces of the brazing sheet on the brazing filler material side and the sacrificial anode material side in a balanced manner.

The core material in the aluminum alloy brazing sheet according to the present invention preferably further includes 0.05 to 0.5% by mass of Si. With such a structure, the post-braze strength of the brazing sheet can be further improved.

The core material in the aluminum alloy brazing sheet according to the present invention preferably further includes 0.05 to 0.5% by mass of Mg.

With such a structure, the post-braze strength of the brazing sheet can be further improved.

The core material in the aluminum alloy brazing sheet according to the present invention preferably further includes at least one or more elements selected from the group consisting of 0.01 to 0.30% by mass of Cr, 0.01 to 0.30% by mass of Zr, and 0.05 to 0.30% by mass of Ti.

With such a structure, the post-braze strength and corrosion resistance of the brazing sheet can be further improved.

The sacrificial anode material in the aluminum alloy brazing sheet according to the present invention preferably further includes 0.05 to 0.5% by mass of Si.

With such a structure, Si is diffused into the core material to bond with Mg to form a compound, whereby the post-braze strength of the brazing sheet can be improved.

The sacrificial anode material in the aluminum alloy brazing sheet according to the present invention preferably further includes 0.1 to 2.0% by mass of Mn.

With such a structure, a solid solution is formed, whereby the post-braze strength of the brazing sheet can be further improved.

The sacrificial anode material in the aluminum alloy brazing sheet according to the present invention preferably further includes 0.01 to 0.30% by mass of Ti.

With such a structure, the corrosion resistance of the brazing sheet can be further improved.

The sacrificial anode material in the aluminum alloy brazing sheet according to the present invention preferably further includes at least one or more elements from 0.01 to 0.30% by mass of Cr, and 0.01 to 0.30% by mass of Zr.

With such a structure, the post-braze strength and corrosion resistance of the brazing sheet can be further improved.

### Effects of the Invention

The aluminum alloy brazing sheet according to the present invention exhibits excellent post-braze strength, corrosion resistance, and brazability at both surfaces thereof on the brazing filler material side and the sacrificial anode material side even through the thickness of the brazing sheet is thin, namely, less than 200 µm.

### Brief Description of the Drawings

Fig. 1 shows a cross-sectional view of evaluation specimens used to evaluate the brazability between opposed brazing filler material sides of aluminum alloy brazing sheets according to the present invention.
Fig. 2 shows a cross-sectional view of evaluation specimens used to evaluate the brazability between a brazing filler material side and a sacrificial anode material side of aluminum alloy brazing sheets according to the present invention.

### Mode for Carrying Out the Invention

Embodiments for implementing an aluminum alloy brazing sheet in the present invention will be described in detail below.

The aluminum alloy brazing sheet in the present invention includes a core material, a brazing filler material provided on one surface of the core material and formed of an Al-Si based alloy, and a sacrificial anode material provided on the other surface of the core material. The brazing sheet has a thickness of less than 200 µm. The thickness of the brazing sheet is preferably in a range of 80 to 180 µm. The brazing sheet having its thickness of less than 200 µm can further reduce the weight of heat exchangers for automobiles and the like.

The core material, brazing filler material, and sacrificial anode material of the aluminum alloy brazing sheet in the present invention will be described sequentially below.

### <Core Material>

The core material in the present invention is formed of an aluminum alloy which includes more than 1.5% by mass and 2.5% or less by mass of Cu, and 0.5 to 2.0% by mass of Mn, with the balance being Al and inevitable impurities. The core material in the present invention preferably further includes 0.05 to 0.5% by mass of Si. The core material in the present invention preferably further includes 0.05 to 0.5% by mass of Mg. The core material in the present invention preferably further includes at least one or more elements selected from the group consisting of: 0.01 to 0.30% by mass of Cr, 0.01 to 0.30% by mass of Zr, and 0.05 to 0.30% by mass of Ti.

The respective elements forming the core material in the present invention will be described below.

### (Cu in Core Material: more than 1.5% by mass and 2.5% or less by mass)

Cu contributes to improving the post-braze strength of the brazing sheet by solid-solution strengthening. When the Cu content is 1.5% by mass or less, the blazing sheet having a thickness of less than 200 µm lacks an amount of Cu remaining after the brazing, resulting in insufficient strength and corrosion resistance. On the other hand, when the Cu content exceeds 2.5% by mass, the solidus temperature of the core material is decreased, and thus the core material might be melted during the brazing. Therefore, the Cu content in the core material is set at more than 1.5% by mass and 2.5% or less by mass, and preferably 1.7 to 2.4% by mass.

### (Mn in Core Material: 0.5 to 2.0% by mass)

Manganese (Mn) forms an intermetallic compound with Al and Si, and is finely distributed in crystal grains, which contributes to dispersion strengthening, thereby improving the post-braze strength of the brazing sheet. When the Mn content is less than 0.5% by mass, the number of intermetallic compounds is decreased, which does not improve the dispersion strengthening by the intermetallic compounds, thus degrading the post-braze strength. On the other hand, when the Mn content exceeds 2.0% by mass, a number of coarse intermetallic compounds are formed, making it difficult to perform rolling itself. Consequently, it is difficult to produce the brazing sheet. Therefore, the Mn content in the core material is set at 0.5 to 2.0% by mass, and preferably at 0.8 to 1.7% by mass.

### (Si in Core Material: 0.05 to 0.5% by mass)

Silicon (Si) forms an intermetallic compound with Al and Mn, and is finely distributed in crystal grains, contributing to dispersion strengthening, thus improving the post-braze strength. When the Si content is less than 0.05% by mass, the effect of improving the post-braze strength becomes insufficient (in other words, the effect of adding Si cannot be obtained sufficiently) . On the other hand, when the Si content is more than 0.5% by mass, the solidus temperature of the core material is decreased, whereby the core material might be melted during heat treatment for brazing. Thus, to exhibit the effect by containing Si in the core material, the Si content is set at 0.05 to 0.5% by mass, and preferably 0.10 to 0.45% by mass.

### (Mg of Core Material: 0.05 to 0.5% by mass)

Magnesium (Mg) has the effect of forming a fine precipitation of Mg₂Si together with Si to improve the post-braze strength of the brazing sheet. When the Mg content is less than 0.05% by mass, the effect of improving the post-braze strength becomes insufficient (in other words, the effect of adding Mg cannot be obtained sufficiently). On the other hand, when the Mg content exceeds 0.5% by mass, brazing by the use of a non-corrosive flux causes the flux to react with Mg, leading to a failure in the braze. Therefore, to exhibit the effect by containing Mg in the core material, the Mg content is set at 0.05 to 0.5% by mass, and preferably 0.10 to 0.45% by mass.

### (Cr in Core Material: 0.01 to 0.30% by mass)

Chromium (Cr) binds with Al to form an Al₃Cr intermetallic compound and thereby has the effect of improving the post-braze strength of the brazing sheet. When the Cr content is less than 0.01% by mass, the effect of improving the post-braze strength becomes insufficient (that is, the effect of adding Cr cannot be obtained sufficiently.) On the other hand, when the Cr content exceeds 0.30% by mass, coarse intermetallic compounds might be formed during casting, causing cracks in rolling. Therefore, to exhibit the effect by containing Cr in the core material, the Cr content is set at 0.01 to 0.30% by mass, and preferably 0.05 to 0.25% by mass.

### (Zr in Core Material: 0.01 to 0.30% by mass)

Zirconium (Zr) bonds with Al to form an Al₃Zr intermetallic compound and thereby has the effect of improving the post-braze strength of the brazing sheet by dispersion strengthening. When the Zr content is less than 0.01% by mass, the effect of improving the post-braze strength becomes insufficient (in other words, the effect of adding Zr cannot be obtained sufficiently). On the other hand, when the Zr content exceeds 0.30% by mass, coarse Al₃Zr intermetallic compounds are formed during casting, making it more likely to cause cracking in rolling. Therefore, to exhibit the effect by containing Zr in the core material, the Zr content is set at 0.01 to 0.30% by mass, and preferably 0.03 to 0.25% by mass.

### (Ti in Core Material: 0.05 to 0.30% by mass)

Titanium (Ti) is distributed in the form of layer in an Al alloy, thereby enabling the reduction in propagation speed of corrosion in the sheet thickness direction, contributing to improving the corrosion resistance. When the Ti content is less than 0.05% by mass, the layered distribution of Ti is insufficient, thus failing to obtain the adequate effect of improving the corrosion resistance (that is, the effect of adding Ti cannot be obtained sufficiently). On the other hand, when the Ti content exceeds 0.30% by mass, coarse Al₃Ti intermetallic compounds are easily formed during casting, which degrades the workability, making it more likely to cause cracking in rolling. Therefore, to exhibit the effect due to containing Ti in the core material, the Ti content is set at 0.05 to 0.30% by mass, and preferably 0.07 to 0.25% by mass.

### (Balance in Core Material: Al and inevitable impurities)

The components of the core material include the balance being Al and inevitable impurities, in addition to the components mentioned above. Note that the inevitable impurities can include, for example, Fe, Zn, In, Sn, and Ni. The core material is allowed to contain the balance that includes 0.30% or less by mass (preferably 0.25% or less by mass) of Fe, 0.13% or less by mass (preferably 0.10% or less by mass) of Zn, and 0.05% or less by mass (preferably 0.03% or less by mass) of each of In, Sn and Ni without interrupting the effects of the present invention. Note that when the content of each of the above-mentioned Si, Mg, Cr, Zr, and Ti elements is below the corresponding lower limit, such an element can be defined as the inevitable impurity.

### <Brazing Filler Material>

A brazing filler material of the present invention is formed of an Al-Si based alloy. Examples of an Al-Si based alloy include general JIS alloys, such as JIS 4343 alloy or JIS 4045 alloy. Here, the Al-Si based alloy can include, in addition to an Al alloy containing Si, an Al alloy containing Zn. That is, the Al-Si based alloy can be an Al-Si based alloy or an Al-Si-Zn based alloy. For example, an Al-Si based alloy containing 5 to 13% by mass of Si can be used.

### (Thickness of Brazing Filler Material: 15 to 50 µm)

The brazing filler material formed of the Al-Si based alloy normally starts to melt at about 580°C or higher and is converted into a liquid phase, which flows to fill in a bonding portion. When the thickness of the brazing filler material is less than 15 µm, the amount of fluid brazing filler material in the bonding portion is lacking, which might degrade the brazability. On the other hand, when the thickness of the brazing filler material exceeds 50 µm, the amount of fluid brazing filler material is increased, and part of the brazing filler material might be diffused into the core material, causing erosion. In particular, this influence appears remarkable for the brazing sheet of less than 200 µm in thickness. Therefore, the thickness of the brazing filler material is set at 15 to 50 µm.

### <Sacrificial Anode Material>

The sacrificial anode material in the present invention includes 2.0 to 10.0% by mass of Zn, an Mg content therein being restricted to 0.10% or less by mass, with the balance being Al and inevitable impurities.

The sacrificial anode material in the present invention preferably further includes 0.05 to 0.5% by mass of Si. The sacrificial anode material in the present invention preferably further includes 0.1 to 2.0% by mass of Mn. The sacrificial anode material in the present invention preferably further includes 0.01 to 0.30% by mass of Ti. The sacrificial anode material in the present invention preferably further includes at least one or more elements selected from the group consisting of: 0.01 to 0.30% by mass of Cr, and 0.01 to 0.30% by mass of Zr.

The respective elements forming the sacrificial anode material in the present invention will be described below.

### (Zn in Sacrificial Anode Material: 2.0 to 10.0% by mass)

Zinc (Zn) makes the corrosion potential of the sacrificial anode material negative, causing a difference in corrosion potential of the sacrificial anode material from the core material, contributing to improving the corrosion resistance. When the Zn content is less than 2.0% by mass, a difference in corrosion potential between the sacrificial anode material and the core material becomes insufficient, making it difficult to ensure the corrosion resistance. On the other hand, when the Zn content exceeds 10.0% by mass, the solidus temperature is decreased, and the sacrificial anode material might melt during brazing. Therefore, the Zn content in the sacrificial anode material is set at 2.0 to 10.0% by mass, and preferably at 2.5 to 6.0% by mass.

### (Mg in Sacrificial Anode Material: 0.10% or less by mass)

When the Mg content in the sacrificial anode material exceeds 0.10% by mass, the brazability on the sacrificial anode material side might be significantly degraded. Therefore, to ensure the brazability of the sacrificial anode material side, the Mg content in the sacrificial anode material is restricted to 0.10% or less by mass, and is preferably 0.07% or less by mass .

### (Si in Sacrificial Anode Material: 0.05 to 0.5% by mass)

Silicon (Si) is diffused into the core material during brazing, and binds with Mg to form a precipitation to cause precipitation strengthening, thus contributing to further improving the post-braze strength of the brazing sheet. When the Si content is less than 0.05% by mass, the effect of improving the strength of the sacrificial anode material due to the formation of the precipitation with Mg becomes insufficient. On the other hand, when the Si content exceeds 0.5% by mass, the solidus temperature of the sacrificial anode material is decreased, whereby the sacrificial anode material might be melted in brazing. Thus, to exhibit the effect by containing Si in the sacrificial anode material, the Si content is set at 0.05 to 0.5% by mass, and preferably 0.1 to 0.45% by mass.

### (Mn in Sacrificial Anode Material: 0.1 to 2.0% by mass)

Mn contributes to improving the post-braze strength of the brazing sheet by solid-solution strengthening. When the Mn content is less than 0.1% by mass, the above-mentioned effect becomes insufficient (in other words, the effect of adding Mn cannot be obtained sufficiently). On the other hand, when the Mn content exceeds 2.0% by mass, coarse intermetallic compounds are formed during casting, which degrades the workability, making it more likely to cause cracking in rolling. Therefore, to exhibit the effect by containing Mn in the sacrificial anode material, the Mn content is set at 0.1 to 2.0% by mass, and preferably 0.2 to 1.5% by mass.

### (Ti in Sacrificial Anode Material: 0.01 to 0.30% by mass)

Titanium (Ti) is distributed in the form of layer in an Al alloy, making the corrosion form layered, thereby enabling the reduction in propagation speed of corrosion in the sheet thickness direction, contributing to improving the corrosion resistance of the brazing sheet. When the Ti content is less than 0.01% by mass, the effect of improving the corrosion resistance cannot be obtained sufficiently (that is, the effect of adding Ti cannot be obtained sufficiently) . On the other hand, when the Ti content exceeds 0.30% by mass, coarse Al₃Ti intermetallic compounds are easily formed during casting, which degrades the workability, making it more likely to cause cracking in rolling. Thus, to exhibit the effect by containing Ti in the sacrificial anode material, the Ti content is set at 0.01 to 0.30% by mass, and preferably 0.05 to 0.25% by mass.

### (Cr in Sacrificial Anode Material: 0.01 to 0.30% by mass)

Cr bonds with Al to form an Al₃Cr intermetallic compound and thereby contributes to improving the post-braze strength by dispersion strengthening. When the Cr content is less than 0.01% by mass, the effects of improving the strength and corrosion resistance of the brazing sheet become insufficient (that is, the effect of adding Cr cannot be obtained sufficiently.). On the other hand, when the Cr content exceeds 0.30% by mass, coarse Al₃Cr intermetallic compounds are formed to easily cause cracking in rolling. Therefore, to exhibit the effect due to containing Cr in the sacrificial anode material, the Cr content is set at 0.01 to 0.30% by mass, and preferably 0.05 to 0.25% by mass.

### (Zr in Sacrificial Anode Material: 0.01 to 0.30% by mass)

Zirconium (Zr) bonds with Al to form an Al₃Zr intermetallic compound and thereby contributes to improving the post-braze strength by dispersion strengthening. When the Zr content is less than 0.01% by mass, the effect of improving the strength cannot be obtained sufficiently (that is, the effect of adding Zr cannot be obtained sufficiently) . On the other hand, when the Zr content exceeds 0.30% by mass, coarse intermetallic compounds of Al₃Zr are formed during casting, degrading the workability, which might easily cause cracking in rolling. Therefore, to exhibit the effect by containing Zr in the sacrificial anode material, the Zr content is set at 0.01 to 0.30% by mass, and preferably 0.05 to 0.25% by mass.

### (Balance in Sacrificial Anode Material being Al and Inevitable Impurities)

The components of the sacrificial anode material include the balance being Al and inevitable impurities, in addition to the components mentioned above. Note that the inevitable impurities can include, for example, Fe, In, Sn, and Ni. The sacrificial anode material is allowed to contain the balance that includes 0.30% or less by mass (preferably 0.25% or less by mass) of Fe, and 0.05% or less by mass (preferably 0.03% or less by mass) of each of In, Sn and Ni without interrupting the effects of the present invention. When the content of one or each of the above-mentioned Si, Mn, Ti, Cr, and Zr elements is below the corresponding lower limit, such an element can be defined as the inevitable impurity.

### (Thickness of Sacrificial Anode Material: 15 to 50 µm)

The sacrificial anode material is essential to ensure the corrosion resistance, as a sacrificial anode, of an inner surface of the brazing sheet for a heat exchanger, such as a radiator. For a sacrificial anode material of less than 15 µm in thickness, since the absolute amount of Zn in the sacrificial anode material becomes small even though the Zn content is set as mentioned above, the corrosion potential to the core material does not become sufficiently negative, degrading the corrosion resistance on the sacrificial anode material side. On the other hand, when the thickness of the sacrificial anode material exceeds 50 µm, in the brazing sheet of less than 200 µm in thickness, the cladding rate of the sacrificial anode material becomes larger, degrading the pressure bondability. Therefore, the thickness of the sacrificial anode material is set at 15 to 50 µm.

### (Total of Cladding Rates of Brazing Filler Material and Sacrificial Anode Material: 50% or less)

In the aluminum alloy brazing sheet in the present invention, the total of cladding rates of the brazing filler material and sacrificial anode material is set at 50% or less. Here, the total of cladding rates of the brazing filler material and sacrificial anode material can be determined in terms of ratio (%) of the sum of the thicknesses of the brazing filler material and sacrificial anode material to the thickness of the brazing sheet. That is, the cladding rate is represented by formula of 100 × (R + G)/T (%) where T (µm) is a thickness of the brazing sheet, R (µm) is a thickness of the brazing filler material, and G (µm) is a thickness of the sacrificial anode material.

When such a total of cladding rates exceeds 50%, the brazing sheet of less than 200 µm in thickness makes it difficult to ensure the adequate post-braze strength. The upper limit of the total of the cladding rates of the brazing filler material and sacrificial anode material is preferably 45%, whereas the lower limit thereof is preferably 25% in terms of ensuring the adequate brazability and corrosion resistance while sufficiently ensuring the thicknesses of the brazing filler material and sacrificial anode material in the brazing sheet of less than 200 µm in thickness.

### <Manufacturing Method for Brazing Sheet>

The core material, sacrificial anode material, and brazing filler material, which are materials for the aluminum alloy brazing sheet in the present invention, can be manufactured by common methods. The manufacturing methods for the core material, sacrificial anode material, and brazing filler material are not particularly limited. For example, these materials can be manufactured by the following methods.

After casting the aluminum alloy for the core material with the above-mentioned composition at a predetermined casting temperature, an ingot obtained in this manner is subjected to face milling as needed, followed by homogeneous heat treatment, which can produce a core-material ingot. Further, after casting the aluminum alloy for the sacrificial anode material and the aluminum alloy for the brazing filler material with the above-mentioned compositions at predetermined casting temperatures, ingots obtained in this manner are subjected to face milling as needed, followed by homogeneous heat treatment. Subsequently, these ingots are hot-rolled, thus enabling the manufacture of a sacrificial anode material member and a brazing filler material member.

Thereafter, the sacrificial anode material member is overlapped on one side of the core-material ingot, while the brazing filler material member is overlapped on the other side of the core-material ingot, and these overlapped members are then hot-rolled to form a plate member by press-bonding and rolling. Then, the plate member is cold-rolled to produce an aluminum alloy clad material with a predetermined thickness, thereby producing a brazing sheet. The plate member may be subjected to an annealing process as needed during the cold-rolling process or after the cold-rolling process.

The aluminum alloy brazing sheet and the manufacturing method therefor according to the present invention have been described above. To implement the present invention, other conditions not specified above can be those known in the related art. Such other conditions are not limited as long as they exhibit the effects obtained by the above-mentioned conditions.

### EXAMPLES

The present invention will further be described in detail below by way of Examples.

The core-material aluminum alloys, sacrificial anode material aluminum alloys, and brazing filler material aluminum alloys with the compositions shown in Tables 1 to 3 were melted, casted, and subjected to homogenization treatment by common methods, thereby producing a core-material ingot (core-material member), a sacrificial anode material ingot, and a brazing filler material ingot. The sacrificial anode material ingot and the brazing filler material ingot were hot-rolled into a predetermined thickness, thereby producing a sacrificial anode material member and a brazing filler material member, respectively Then, the sacrificial anode material member was overlapped on one side of the core-material member, and the brazing filler material member was overlapped on the other side thereof in such a manner as to achieve various combinations of materials shown in Tables 4 and 5, followed by hot-rolling to pressure-bond these members, thereby producing a plate member. Thereafter, cold-rolling was performed to make brazing sheets, each having a predetermined thickness (samples No. 1 to 55).

Note that in Tables 1 to 3, components not included are indicated by blank boxes, and numerical values not satisfying features of the present invention are underlined.

**[Table 1]**

| Core material No. | % by mass, Balance: Al and inevitable impurities | | | | | | | Note |
|---|---|---|---|---|---|---|---|---|
| | Cu | Mn | Si | Mg | Cr | Zr | Ti | |
| S1 | 1.55 | 1.20 | | | | | | Inventive Example |
| S2 | 2.50 | 1.20 | | | | | | |
| S3 | 2.00 | 0.50 | | | | | | |
| S4 | 2.00 | 2.00 | | | | | | |
| S5 | 2.00 | 1.20 | 0.05 | | | | | |
| S6 | 2.00 | 1.20 | 0.50 | | | | | |
| S7 | 2.00 | 1.20 | | 0.05 | | | 0.05 | |
| S8 | 2.00 | 1.20 | | 0.50 | 0.05 | | | |
| S9 | 2.00 | 1.20 | | | 0.25 | 0.05 | | |
| S10 | 2.00 | 1.20 | | | | 0.25 | | |
| S11 | 2.00 | 1.20 | | | | | 0.30 | |
| S12 | 2.00 | 1.20 | 0.35 | 0.20 | | | 0.15 | |
| S13 | 2.00 | 1.20 | 0.20 | 0.35 | | 0.15 | 0.15 | |
| S14 | 2.00 | 1.20 | 0.25 | 0.25 | 0.15 | | 0.15 | |
| S15 | 1.50 | 1.20 | | | | | | Comparative Example |
| S16 | 2.55 | 1.20 | | | | | | |
| S17 | 2.00 | 0.45 | | | | | | |
| S18 | 2.00 | 2.05 | | | | | | |
| S19 | 2.00 | 1.20 | 0.55 | | | | | |
| S20 | 2.00 | 1.20 | | 0.55 | 0.05 | | | |
| S21 | 2.00 | 1.20 | | | 0.35 | 0.05 | | |
| S22 | 2.00 | 1.20 | | | | 0.35 | 0.05 | |
| S23 | 2.00 | 1.20 | | | | | 0.35 | |

**[Table 2]**

| Brazing filler material No. | % by mass, Balance: Al inevitable impurities | Note |
|---|---|---|
| | Si | |
| R1 | 10.0 | Inventive Example |
| R2 | 5.0 | |
| R3 | 12.5 | |

**[Table 3]**

| Sacrificial anode material No. | % by mass, Balance: Al and inevitable impurities | | | | | | | Note |
|---|---|---|---|---|---|---|---|---|
| | Zn | Mg | Si | Mn | Ti | Cr | Zr | |
| G1 | 2.00 | | | | | | | Inventive Example |
| G2 | 10.00 | | | | | | | |
| G3 | 3.50 | 0.10 | | | | | | |
| G4 | 3.50 | 0.05 | 0.05 | | | | | |
| G5 | 3.50 | | 0.50 | | | | | |
| G6 | 3.50 | | | 0.10 | | | | |
| G7 | 3.50 | | | 2.00 | | | | |
| G8 | 3.50 | | | | 0.30 | | | |
| G9 | 3.50 | | | | | 0.30 | | |
| G10 | 3.50 | | | | | | 0.30 | |
| G11 | 1.50 | | | | | | | Comparative Example |
| G12 | 10.50 | | | | | | | |
| G13 | 3.50 | 0.15 | | | | | | |
| G14 | 3.50 | | 0.55 | | | | | |
| G15 | 3.50 | | | 2.05 | | | | |
| G16 | 3.50 | | | | 0.35 | | | |
| G17 | 3.50 | | | | | 0.35 | | |
| G18 | 3.50 | | | | | | 0.35 | |

The fabricated brazing sheets were evaluated for the post-braze strength, erosion resistance, brazability, and corrosion resistance on the sacrificial anode material side in the following ways.

### <Post-Braze Strength>

After applying heat treatment to the sample in a drop test system under conditions simulating the brazing (by heating at a temperature of 590°C or higher (maximum 600°C) for three minutes under a nitrogen atmosphere at a dew point of -40°C and with an oxygen concentration of 200 ppm or less), the sample was processed into specimens in conformity with JIS No. 5 (specifically, three specimens were fabricated from each sample) . This specimen was allowed to stand at room temperature (25°C) for one week, and the tensile strength of the specimen was measured by a tensile test in conformity with JIS Z2241 to determine the post-braze strength. Samples having an average of the post-braze strengths of the three specimens of 190 MPa or more were rated as being excellent (A) in terms of post-braze strength; samples having an average of the post-braze strengths of 170 MPa or more and less than 190 MPa were rated as being good (B) ; and samples having a strength of less than 170 MPa were rated as being unsatisfactory (C).

### <Erosion Resistance>

Further, each sample was cold-rolled at a rolling rate of 10%, and then subjected to a heat treatment in the drop test system under conditions simulating the brazing (by heating at a temperature of 590°C or higher (maximum 600°C) for three minutes under a nitrogen atmosphere with an oxygen concentration of 200 ppm or less and at a dew point of -40°C), to form a sample material for evaluation. The sample material obtained in this manner was cut into 2 cm square piece and embedded in resin. The cut surface of the sample material was polished, followed by etching with a Keller's reagent, and the polished surface was then observed with a microscope. Samples in which an area ratio of core-material parts with no erosion was 50% or more were rated as being good (B) in terms of erosion resistance; and samples having an area ratio of core-material parts with no erosion was less than 50% were rated as being unsatisfactory (C). Note that the evaluation of the erosion resistance was performed only on samples rated as being either excellent or good in terms of the post-braze strength.

### <Brazability>

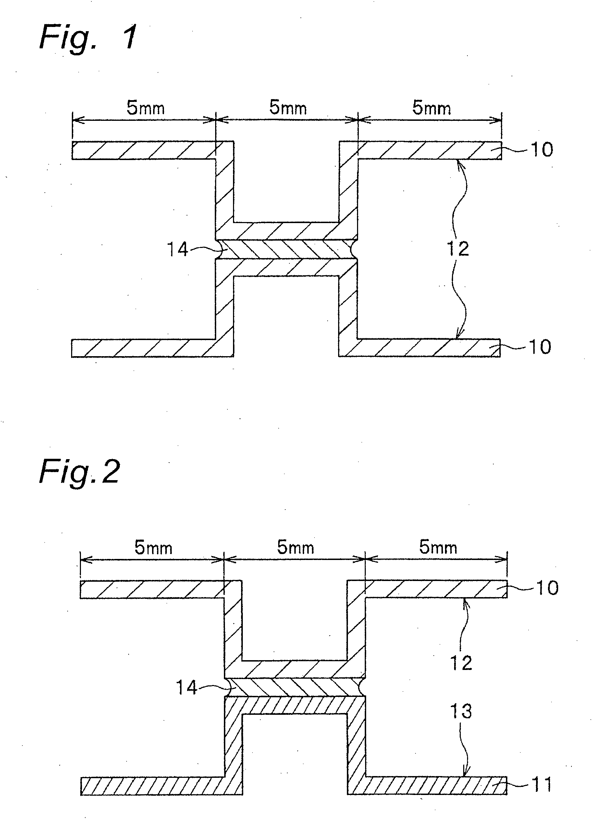

Fig. 1 shows a cross-sectional view of evaluation specimens used to evaluate the brazability between opposed brazing filler material sides of aluminum alloy brazing sheets according to the present invention. Fig. 2 shows a cross-sectional view of evaluation specimens used to evaluate the brazability between a brazing filler material side and a sacrificial anode material side of aluminum alloy brazing sheets according to the present invention.

Two specimens 10 with an area of 25 mm x 20 mm were taken out of each test material. As shown in Fig. 1, these two specimens were formed such that their central parts in the longitudinal direction were protruded with their brazing filler material side surfaces 12 positioned on the convex side. Non-corrosive flux was applied at 10 (±0.2) g/m² onto the top of each of the two formed specimens 10 (the entire convex-side surface of the protruded part located at the center in the longitudinal direction). As illustrated in Fig. 1, these specimens were positioned with their tops overlapped each other, and brazed together under heat treatment conditions simulating the brazing (by heating at 590°C or higher (maximum temperature of 600°C) for three minutes under a nitrogen atmosphere having a dew point of -40°C and an oxygen concentration of 200 ppm or less) . The brazed specimens were cut and embedded in resin. The test specimen(s) had the cut surface polished, and then the length of a fillet 14 at the polished surface was measured. Samples with the fillet 14 having a length of 4 mm or more were rated as having good brazability (B) ; and samples with the fillet 14 having a length of less than 4 mm were rated as having unsatisfactory brazability (C). Note that the evaluation of this brazability was performed only on samples rated as being good in terms of the erosion resistance.

Likewise, two specimens 10 with an area of 25 mm x 20 mm were taken out of each sample material. As shown in an upper part of Fig. 2, one of the two specimens was formed such that its central part in the longitudinal direction was protruded with its brazing filler material side surfaces 12 positioned on the convex side, thereby forming a specimen 10. On the other hand, as shown in a lower part of Fig. 2, the other of the two specimens was formed such that its central part in the longitudinal direction was protruded with its sacrificial anode material side surface 13 positioned on the convex side, thereby forming a specimen 11. Non-corrosive flux was applied at 10(±0.2) g/m² onto the top of each of the two formed specimens 10 and 11 (the entire convex-side surface of the protruded part located at the center in the longitudinal direction). As illustrated in Fig. 2, these specimens were positioned with their tops overlapped each other and then brazed together under heat treatment conditions simulating the brazing in the same way as that mentioned above. The brazability was evaluated by the same procedure as that described with reference to Fig. 1.

### <Corrosion Resistance>

After applying a heat treatment to the sample in a drop test system under conditions simulating the brazing (by heating at a temperature of 590°C or higher (maximum 600°C) for three minutes under a nitrogen atmosphere with an oxygen concentration of 200 ppm or less and at a dew point of -40°C), the sample was cut into pieces, each having the size with 50 mm width x 60 mm length, which were used as sample materials for evaluation. A masking seal having the size with 60 mm width and 70 mm length was placed to cover the entire surface of the brazing filler material surface and further folded toward the sacrificial anode material surface side, covering edge parts with a width of 5 mm from respective four sides of the sacrificial anode material surface.

A corrosion test including 90 cycles was performed on the specimen. Each cycle involved immersing the specimen in a test solution that contained Na⁺: 118 ppm, Cl⁻: 58 ppm, SO4²⁻: 60 ppm, Cu²⁺: 1ppm, and Fe³⁺: 30ppm (at 88°C for 8 hours), naturally cooling the specimen to the room temperature while immersing the specimen in the test solution, and then holding the specimen at the room temperature for 16 hours. A corrosion state of the sacrificial anode material surface of each specimen was observed with an optical microscope, whereby a depth of corrosion in the specimen was measured by a focal depth method. Samples of specimens having the ratio of a maximum depth of corrosion relative to the sheet thickness of 50% or less were rated as being good (B) in terms of corrosion resistance; and samples of specimens having the ratio exceeding 50% were rated as being unsatisfactory (C). Note that the evaluation of this corrosion resistance was performed only on samples rated as being good in terms of the post-braze strength, erosion resistance, and brazability.

The results of these tests are shown in Tables 4 and 5. Note that in Tables 4 and 5, items incapable of being evaluated or not evaluated are indicated by a mark "-", and factors not satisfying features of the present invention are indicated by underlining numeral values. Regarding the evaluation of the brazability, the results of the evaluation of the brazability between the brazing filler materials are shown in the column denoted by "brazing-brazing". Regarding the evaluation of the brazability, the results of the evaluation of the brazability between the brazing filler material and the sacrificial anode material are shown in the column denoted by "brazing-sacrificial".

**[Table 4]**

| Sample No. | Core material | Brazing filler material | | Sacrificial anode material | | Sheet thickness (µm) | Total of cladding rates (%) | Post-Braze strength | | Erosion resistance | Brazability | | Corrosion resistance | Note |
|---|---|---|---|---|---|---|---|---|---|---|---|---|---|---|
| | No. | No. | Thickness (µm) | No. | Thickness (µm) | | | Evaluation | Strength (MPa) | | Brazing-Brazing | Brazing-Sacrificial | | |
| 1 | S1 | R1 | 30 | G1 | 30 | 170 | 35 | B | 174 | B | B | B | B | |
| 2 | S2 | R1 | 30 | G1 | 30 | 170 | 35 | B | 182 | B | B | B | B | |
| 3 | S3 | R1 | 30 | G1 | 30 | 170 | 35 | B | 178 | B | B | B | B | |
| 4 | S4 | R1 | 30 | G1 | 30 | 170 | 35 | B | 178 | B | B | B | B | |
| 5 | S5 | R1 | 30 | G1 | 30 | 170 | 35 | B | 180 | B | B | B | B | |
| 6 | S6 | R1 | 30 | G1 | 30 | 170 | 35 | A | 203 | B | B | B | B | |
| 7 | S7 | R1 | 30 | G1 | 30 | 170 | 35 | B | 182 | B | B | B | B | |
| 8 | S8 | R1 | 30 | G1 | 30 | 170 | 35 | A | 216 | B | B | B | B | |
| 9 | S9 | R1 | 30 | G1 | 30 | 170 | 35 | B | 178 | B | B | B | B | |
| 10 | S10 | R1 | 30 | G1 | 30 | 170 | 35 | B | 173 | B | B | B | B | |
| 11 | S11 | R1 | 30 | G1 | 30 | 170 | 35 | B | 177 | B | B | B | B | |
| 12 | S12 | R1 | 30 | G1 | 30 | 170 | 35 | A | 211 | B | B | B | B | |
| 13 | S13 | R1 | 30 | G1 | 30 | 170 | 35 | A | 215 | B | B | B | B | |
| 14 | S14 | R1 | 30 | G1 | 30 | 170 | 35 | A | 215 | B | B | B | B | |
| 15 | S12 | R2 | 30 | G2 | 30 | 170 | 35 | A | 216 | B | B | B | B | |
| 16 | S12 | R3 | 30 | G3 | 30 | 170 | 35 | A | 217 | B | B | B | B | |
| 17 | S12 | R1 | 30 | G4 | 30 | 170 | 35 | A | 217 | B | B | B | B | Example |
| 18 | S12 | R1 | 30 | G2 | 30 | 170 | 35 | A | 216 | B | B | B | B | |
| 19 | S12 | R1 | 30 | G3 | 30 | 170 | 35 | A | 217 | B | B | B | B | |
| 20 | S12 | R1 | 30 | G4 | 30 | 170 | 35 | A | 217 | B | B | B | B | |
| 21 | S12 | R1 | 30 | G5 | 30 | 170 | 35 | A | 221 | B | B | B | B | |
| 22 | S12 | R1 | 30 | G6 | 30 | 170 | 35 | A | 213 | B | B | B | B | |
| 23 | S12 | R1 | 30 | G7 | 30 | 170 | 35 | A | 216 | B | B | B | B | |
| 24 | S12 | R1 | 30 | G8 | 30 | 170 | 35 | A | 211 | B | B | B | B | |
| 25 | S12 | R1 | 30 | G9 | 30 | 170 | 35 | A | 217 | B | B | B | B | |
| 26 | S12 | R1 | 30 | G10 | 30 | 170 | 35 | A | 215 | B | B | B | B | |
| 27 | S12 | R1 | 30 | G1 | 30 | 195 | 31 | A | 219 | B | B | B | B | |
| 28 | S12 | R1 | 20 | G1 | 25 | 90 | 50 | B | 172 | B | B | B | B | |
| 29 | S12 | R1 | 15 | G1 | 30 | 170 | 26 | A | 216 | B | B | B | B | |
| 30 | S12 | R1 | 50 | G1 | 30 | 170 | 47 | A | 201 | B | B | B | B | |
| 31 | S12 | R1 | 30 | G1 | 15 | 170 | 26 | A | 239 | B | B | B | B | |
| 32 | S12 | R1 | 30 | G1 | 50 | 170 | 47 | B | 172 | B | B | B | B | |
| 33 | S12 | R1 | 45 | G1 | 40 | 170 | 50 | B | 182 | B | B | B | B | |

**[Table 5]**

| Sample No. | Core material | Brazing filler material | | Sacrificial anode material | | Sheet thickness (µm) | Total of cladding rates (%) | Post-Braze strength | | Erosion resistance | Brazability | | Corrosion resistance | Note |
|---|---|---|---|---|---|---|---|---|---|---|---|---|---|---|
| | No. | No. | Thickness (µm) | No. | Thickness (µm) | | | Evaluation | Strength (MPa) | | Brazing-Brazing | Brazing-Sacrificial | | |
| 34 | S15 | R1 | 30 | G1 | 30 | 170 | 35 | C | 169 | - | - | - | - | |
| 35 | S16 | R1 | 30 | G1 | 30 | 170 | 35 | - | - | - | - | - | - | |
| 36 | S17 | R1 | 30 | G1 | 30 | 170 | 35 | C | 168 | - | - | - | - | |
| 37 | S18 | R1 | 30 | G1 | 30 | 170 | 35 | - | - | - | - | - | - | |
| 38 | S19 | R1 | 30 | G1 | 30 | 170 | 35 | - | - | - | - | - | - | |
| 39 | S20 | R1 | 30 | G1 | 30 | 170 | 35 | A | 215 | B | C | C | - | |
| 40 | S21 | R1 | 30 | G1 | 30 | 170 | 35 | - | - | - | - | - | - | |
| 41 | S22 | R1 | 30 | G1 | 30 | 170 | 35 | - | - | - | - | - | - | |
| 42 | S23 | R1 | 30 | G1 | 30 | 170 | 35 | - | - | - | - | - | - | |
| 43 | S12 | R1 | 14 | G1 | 30 | 170 | 26 | A | 212 | B | C | C | - | |
| 44 | S12 | R1 | 52 | G1 | 30 | 170 | 48 | A | 195 | C | - | - | - | Comparative |
| 45 | S12 | R1 | 30 | G11 | 30 | 170 | 35 | A | 206 | B | B | B | C | Example |
| 46 | S12 | R1 | 30 | G12 | 30 | 170 | 35 | - | - | - | - | - | - | |
| 47 | S12 | R1 | 30 | G13 | 30 | 170 | 35 | A | 223 | B | B | C | | |
| 48 | S12 | R1 | 30 | G14 | 30 | 170 | 35 | - | - | - | - | - | - | |
| 49 | S12 | R1 | 30 | G15 | 30 | 170 | 35 | - | - | - | - | - | - | |
| 50 | S12 | R1 | 30 | G16 | 30 | 170 | 35 | - | - | - | - | - | - | |
| 51 | S12 | R1 | 30 | G17 | 30 | 170 | 35 | - | - | - | - | - | - | |
| 52 | S12 | R1 | 30 | G18 | 30 | 170 | 35 | - | - | - | - | - | - | |
| 53 | S12 | R1 | 30 | G1 | 13 | 160 | 27 | A | 236 | B | B | B | C | |
| 54 | S12 | R1 | 30 | G1 | 55 | 170 | 50 | - | - | - | - | - | - | |
| 55 | S12 | R1 | 30 | G1 | 20 | 90 | 56 | C | 167 | - | - | - | - | |

As shown in Tables 1 and 2, brazing sheets (samples No. 1 to 33) were manufactured using core materials (core materials No. S1 to S14), brazing filler materials (brazing filler materials No. R1 to R3), and sacrificial anode materials (sacrificial anode materials No. G1 to G10) that were made of the aluminum alloys satisfying features of the present invention. In these brazing - sheets, the thickness of each of the brazing filler material and the sacrificial anode material was in a range of 15 to 50 µm, the thickness of the brazing sheet was less than 200 µm, and the total cladding rate was 50% or less. Such brazing sheets had excellent post-braze strength, erosion resistance, brazability, and corrosion resistance.

In contrast, samples No. 34 to 55 did not satisfy features of the present invention and thus had the following results.

In sample No. 34, the Cu content in the core material was small, and in sample No. 36, the Mn content in the core material was small. In both samples No. 34 and 36, the evaluation results of the post-braze strength were unsatisfactory. In sample No. 35, the Cu content in the core material was large, and in sample No. 38, the Si content in the core material was large. In both samples No. 35 and 38, the core material was melted during brazing. In sample No. 37, the Mn content in the core material was large; in sample No. 40, the Cr content in the core material was large; in sample No. 41, the Zr content in the core material was large; and in sample No. 42, the Ti content in the core material was large . In all of samples No. 37, 40, 41, and 42, cracks occurred during rolling, failing to produce sample materials. In sample No. 39, the Mg content in the core material was large, resulting in insufficient brazability between the brazing filler materials, and between the brazing filler material and sacrificial anode material.

In sample No. 45, the Zn content in the sacrificial anode material was small, and thereby the evaluation result of the corrosion resistance thereof was unsatisfactory. In sample No. 47, the Mg content in the sacrificial anode material was large, resulting in insufficient brazability between the brazing and sacrificial anode materials. In sample No. 46, the Zn content in the sacrificial anode material was large, and in sample No. 48, the Si content in the sacrificial anode material was large, so that the sacrificial anode materials in both samples No. 46 and 48 were melted during brazing. In sample No. 49, the Mn content in the sacrificial anode material was large; in sample No. 50, the Ti content in the sacrificial anode material was large; in sample No. 51, the Cr content in the sacrificial anode material was large; and in sample No. 52, the Zr content in the sacrificial anode material was large, so that cracks occurred during rolling in all these samples No. 49, 50, 51, and 52, failing to produce sample materials.

In sample No. 43, the brazing filler material was so thin that the brazability became insufficient. In sample No. 44, the brazing filler material was so thick that the erosion resistance was degraded. In sample No. 53, the brazing filler material was so thin that the corrosion resistance was degraded. In sample No. 54, the brazing filler material was so thick that the pressure-bondability was degraded, failing to produce a sample material.

In sample No. 55, the thicknesses of the brazing filler material and sacrificial anode material satisfied features of the present invention. However, since the total cladding rate of this brazing sheet exceeded the upper limit of the requirement specified by the present invention, the post-braze strength becomes unsatisfactory.

### [Description of Reference Numerals]

- 10, 11:: Specimen formed
- 14:: Fillet

## Claims

1. An aluminum alloy brazing sheet comprising a core material, a brazing filler material provided on one surface of the core material and formed of an Al-Si based alloy, and a sacrificial anode material provided on the other surface of the core material, the brazing sheet having a thickness of less than 200 µm, wherein
the core material consists of more than 1.5% by mass and 2.5% or less by mass of Cu, and 0.5 to 2.0% by mass of Mn, and optionally:
0.05 to 0.5% by mass of Si, 0.05 to 0.5% by mass of Mg, and/or at least one or more elements selected from the group consisting of 0.01 to 0.30% by mass of Cr, 0.01 to 0.30% by mass of Zr, and 0.05 to 0.30% by mass of Ti,
with the balance being Al and inevitable impurities, wherein
the sacrificial anode material consists of 2.0 to 10.0% by mass of Zn, an Mg content in the sacrificial anode material being restricted to 0.10% or less by mass, and optionally:
0.05 to 0.5% by mass of Si, 0.1 to 2.0% by mass of Mn, 0.01 to 0.30% by mass of Ti, and/or at least one or more elements from 0.01 to 0.30% by mass of Cr, and 0.01 to 0.30% by mass of Zr, with the balance being Al and inevitable impurities, and wherein
each of the brazing filler material and the sacrificial anode material has a thickness thereof in a range of 15 to 50 µm, and the total of cladding rates of the brazing filler material and sacrificial anode material is 50% or less.

## Patentansprüche

1. Aluminiumlegierungslotblech, umfassend ein Kernmaterial, ein Hartlotfüllmaterial, das auf einer Oberfläche des Kernmaterials bereitgestellt ist und aus einer Legierung auf Al-Si-Basis gebildet ist, und ein Opferanodenmaterial, das auf der anderen Oberfläche des Kernmaterials bereitgestellt ist, wobei das Lotblech eine Dicke von weniger als 200 µm aufweist, wobei
das Kernmaterial besteht aus mehr als 1,5 Massen-% und 2,5 Massen-% oder weniger Cu und 0,5 bis 2,0 Massen-% Mn und gegebenenfalls:
0,05 bis 0,5 Massen-% Si, 0,05 bis 0,5 Massen-% Mg und/oder mindestens ein oder mehrere Elemente, ausgewählt aus der Gruppe, bestehend aus 0,01 bis 0,30 Massen-% Cr, 0,01 bis 0,30 Massen-% Zr und 0,05 bis 0,30 Massen-% Ti,
wobei der Rest Al und unvermeidliche Verunreinigungen ist, wobei
das Opferanodenmaterial besteht aus 2,0 bis 10,0 Massen-% Zn, ein Mg-Gehalt im Opferanodenmaterial ist auf 0,10 Massen-% oder weniger beschränkt und gegebenenfalls:
0,05 bis 0,5 Massen-% Si, 0,1 bis 2,0 Massen-% Mn, 0,01 bis 0,30 Massen-% Ti und/oder mindestens ein oder mehrere Elemente von 0,01 bis 0,30 Massen-% Cr und 0,01 bis 0,30 Massen-% Zr, wobei der Rest Al und unvermeidliche Verunreinigungen ist, und wobei
sowohl das Hartlotfüllmaterial als auch das Opferanodenmaterial eine Dicke in einem Bereich von 15 bis 50 µm aufweisen und die Gesamtüberzugsraten des Hartlotfüllmaterials und des Opferanodenmaterials 50% oder weniger betragen.

## Revendications

1. Tôle à brasage en alliage d'aluminium comprenant un matériau de noyau, un matériau d'apport pour brasage prévu sur une surface du matériau de noyau et formé d'un alliage à base de Al-Si, et un matériau d'anode réactive prévu sur l'autre surface du matériau de noyau, la tôle à brasage ayant une épaisseur de moins de 200 µm, dans laquelle
le matériau de noyau est constitué de plus de 1,5 % en masse et 2,5 % en masse ou moins de Cu, et 0,5 à 2,0 % en masse de Mn, et en option :
0,05 à 0,5 % en masse de Si, 0,05 à 0,5 % en masse de Mg, et/ou au moins un ou plusieurs éléments sélectionnés parmi le groupe constitué de 0,01 à 0,30 % en masse de Cr, 0,01 à 0,30 % en masse de Zr, et 0,05 à 0,30 % en masse de Ti, avec l'équilibre qui est Al et des impuretés inévitables, dans laquelle le matériau d'anode réactive est constitué de 2,0 à 10,0 % en masse de Zn, une teneur en Mg dans le matériau d'anode réactive étant limitée à 0,10 % en masse ou moins, et en option :
0,05 à 0,5 % en masse de Si, 0,1 à 2,0 % en masse de Mn, 0,01 à 0,30 % en masse de Ti, et/ou au moins un ou plusieurs éléments parmi 0,01 à 0,30 % en masse de Cr, et 0,01 à 0,30 % en masse de Zr, avec l'équilibre qui est Al et des impuretés inévitables, et dans laquelle
chacun du matériau d'apport pour brasage et du matériau d'anode réactive a une épaisseur de celui-ci dans une plage de 15 à 50 µm, et le total des taux de placage du matériau d'apport pour brasage et du matériau d'anode réactive est de 50 % ou moins.
